# EUROPEAN PATENT APPLICATION

(11) **EP 2 530 916 A1**
(43) Date of publication of application: **05.12.2012**
(21) Application number: 11737024.7
(22) Date of filing: 26.01.2011
(51) Int. Cl.: H04M 1/2745, H04M 1/00

(54) **HANDS-FREE DEVICE FOR CELLULAR PHONE AND TELEPHONE DIRECTORY REGISTRATION METHOD**

(30) Priority: 28.01.2010 JP 2010017192
(71) Applicant: Clarion Co., Ltd., Saitama-shi, Saitama 330-0081 (JP)
(72) Inventor: MOMIYAMA, Eri, Saitama-shi Saitama 3300081 (JP); MIYAZAKI, Masamitsu, Saitama-shi Saitama 3300081 (JP); SHODA, Yuichi, Saitama-shi Saitama 3300081 (JP)
(74) Representative: MERH-IP Matias Erny Reichl Hoffmann
(86) International application number: PCT/JP2011/051440
(87) International publication number: WO 2011/093311

(57) **Abstract**

A hands-free device for a mobile-phone handset includes: a read unit that detects connection of a mobile-phone handset and reads identifying information of the mobile-phone handset connected; a phone book creation unit that creates a phone book for each piece of the identifying information; and a change unit that changes the identifying information assigned to the phone book to identifying information of another mobile-phone handset.

## Description

### TECHNICAL FIELD

The present invention relates to a hands-free device for a mobile-phone handset that manages a phone book associated with each mobile-phone handset that is connected thereto and a phone book registration method for the phone book.

### BACKGROUND ART

There is a hands-free device for a mobile-phone handset known in the prior art that enables a navigation device and a plurality of phone handset to be connected using wireless communication such as Bluetooth (Registered Trademark) and enables phone book data to be managed for each mobile-phone handset (refer to the patent literature 1).

### CITATION LIST

### PATENT LITERATURE

[PATENT LITERATURE 1] Japanese Laid Open Patent Publication No. 2006-60293

### SUMMARY OF INVENTION

### TECHNICAL PROBLEM

When a mobile-phone handset is connected with a navigation device using Bluetooth (Registered Trademark) via a vehicle-mounted hands-free device for a mobile-phone handset, the navigation device capable of hands-free call acquires latest phone book data of the mobile-phone handset with mobile-phone handset identifying data including a Bluetooth Device Address, a phone number, or the like as a key. As a result, phone book data of a plurality of mobile-phone handsets can be individually updated, saved, and managed.

When a mobile-phone handset associated with phone book data is changed to a successor mobile-phone handset, Bluetooth Device Address is also changed. For this reason, if the phone book data have been associated with the successor mobile-phone handset with Bluetooth Device Address as a key as described above, the navigation device deems the successor mobile-phone handset after the change to be a mobile-phone handset that is to be newly registered irrelevantly to the mobile-phone handset before the change. As a result, the phone book data of the mobile-phone handset before the change can not be managed as the phone book data of the successor mobile-phone handset after the change for managing the data by replacing the correspondence between the phone book data and the mobile-phone handset before the change with the correspondence between the phone book data and the successor mobile-phone handset after the change.

### SOLUTION TO PROBLEM

According to the first aspect of the present invention, a hands-free device for a mobile-phone handset comprises: a read unit that detects connection of a mobile-phone handset and reads identifying information of the mobile-phone handset connected; a phone book creation unit that creates a phone book for each piece of the identifying information; and a change unit that changes the identifying information assigned to the phone book to identifying information of another mobile-phone handset.
According to the second aspect of the present invention, in the hands-free device for the mobile-phone handset according to the first aspect, it is preferred that the hands-free device for the mobile-phone handset further comprises: an inquiry unit that, when the identifying information of the mobile-phone handset is read by the read unit, inquires of a user as to an intention of the user for change by the change unit of the identifying information assigned to the phone book; an input unit with which the user inputs the intention in response to an inquiry by the inquiry unit; and a control unit that controls the change based upon the intention.
According to the third aspect of the present invention, in the hands-free device for the mobile-phone handset according to the first or the second aspect, it is preferred that the phone book includes phone book data that includes a phone number, speed dial data that includes a speed dial number, incoming and outgoing call history data that includes an incoming and outgoing call history of the mobile-phone handset connected, and the identifying information.
According to the fourth aspect of the present invention, a phone book registration method comprises: searching a phone book associated with a first mobile-phone handset in a storage in response to a user input; reading identifying information of a second mobile-phone handset, which is different from the first mobile-phone handset, from the second mobile-phone handset; and newly associating the identifying information read from the second mobile-phone handset with the phone book searched and registering the phone book into the storage.
According to the fifth aspect of the present invention, in the phone book registration method according to the fourth aspect, it is preferred that the user input is based upon an intention of a user for newly associating the identifying information with the phone book and registering the phone book into the storage.
According to the sixth aspect of the present invention, in the phone book registration method according to the fourth or the fifth aspect, it is preferred that the identifying information is at least one of a Bluetooth Device Address of a Bluetooth standard, a combination of the Bluetooth Device Address with a Bluetooth Device Name, and a phone number.
According to the seventh aspect of the present invention, in the phone book registration method according to any one of the fourth through the sixth aspects, it is preferred that the phone book includes phone book data that includes a phone number, speed dial data that includes a speed dial number, incoming and outgoing call history data that includes an incoming and outgoing call history of the first mobile-phone handset, and the identifying information.

### ADVANTAGEOUS EFFECT OF THE INVENTION

According to the present invention, a phone book associated with mobile-phone handset unique identifying information can be used successively in association with new mobile-phone handset unique identifying information.

### BRIEF DESCRIPTION OF THE DRAWINGS

[FIG. 1] FIG. 1 is a diagram that shows a structure of a vehicle-mounted hands-free device 100 of an embodiment in terms of the inside and periphery thereof.
[FIG. 2] FIG. 2 is a diagram that explains a phone book.
[FIG. 3] FIG. 3 is a flowchart that explains new registration, update registration, and replacement registration processing procedure of a phone book.
[FIG. 4] FIG. 4 is a flowchart that explains new registration, update registration, and replacement registration processing procedure of a phone book.

### DESCRIPTION OF EMBODIMENTS

The present invention is to be applied to an electronic device such as a navigation device in which a phone book can be registered for each of a plurality of mobile-phone handsets and, if a mobile-phone handset that has been registered in the electronic device is changed, the present invention enables the phone book of the mobile-phone handset before the change to be easily registered as the phone book of the new mobile-phone handset replaced.

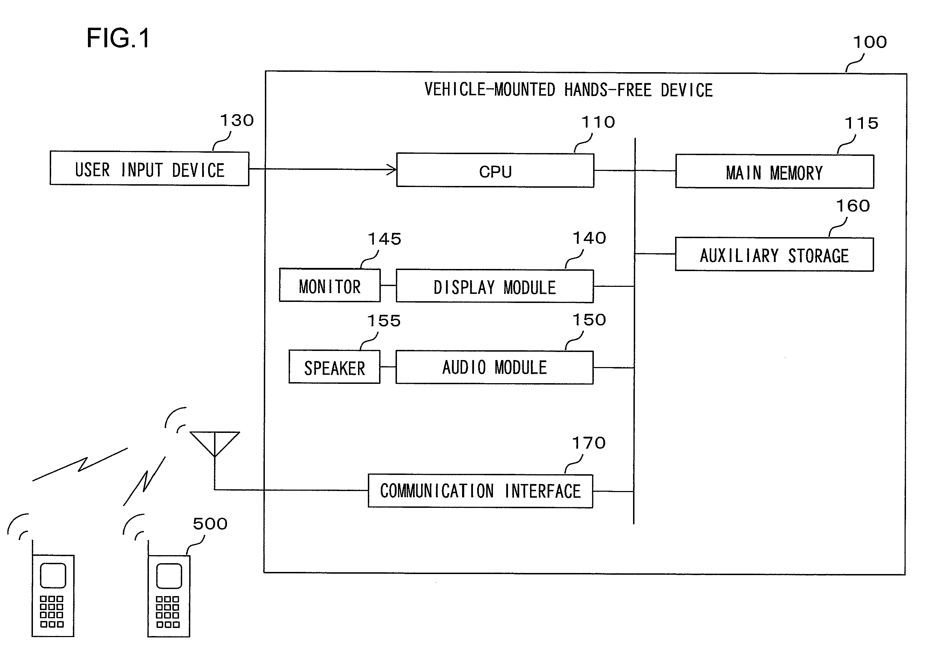

An embodiment of the hands-free device according to the present invention, which is to be used in conjunction with a navigation device, will be explained with reference to FIG. 1 to FIG. 4. FIG. 1 is a diagram that shows a structure of the vehicle-mounted hands-free device for a mobile-phone handset of the present embodiment, i.e., the vehicle-mounted hands-free device 100 in terms of the inside and periphery thereof.

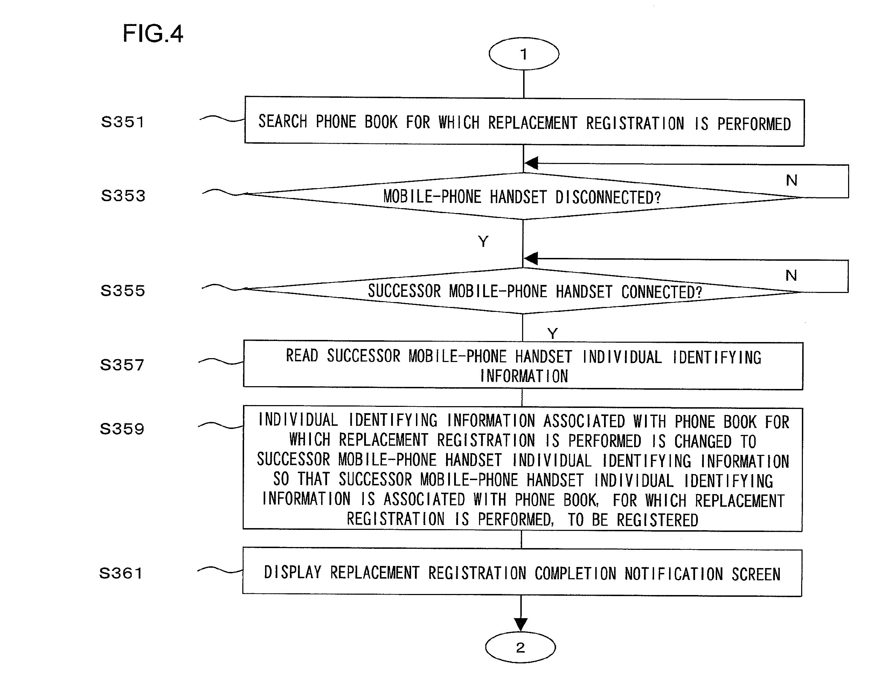

A CPU 110 controls all processing at the vehicle-mounted hands-free device 100 including replacement registration processing described later in the explanation of FIG. 4. Peripheral circuits connected to the CPU 110 via a bus are configured to include a main memory 115, a display module 140, an audio module 150, an auxiliary storage 160, a communication interface 170, and the like. The main memory 115 is configured to include a work memory, which is a work area for the CPU 110, a program memory, in which a control program of the CPU 110 is stored, and the like.

A user input device 130 is a user interface such as a push-button switch, a remote controller or the like. The display module 140, which includes a monitor 145, a monitor drive circuit, and the like, displays on its screen image data such as text, graphics, and the like having been output from the CPU 110. The audio module 150 performs control to convert a voice signal output from the CPU 110 into a voice to be output via a speaker 155.

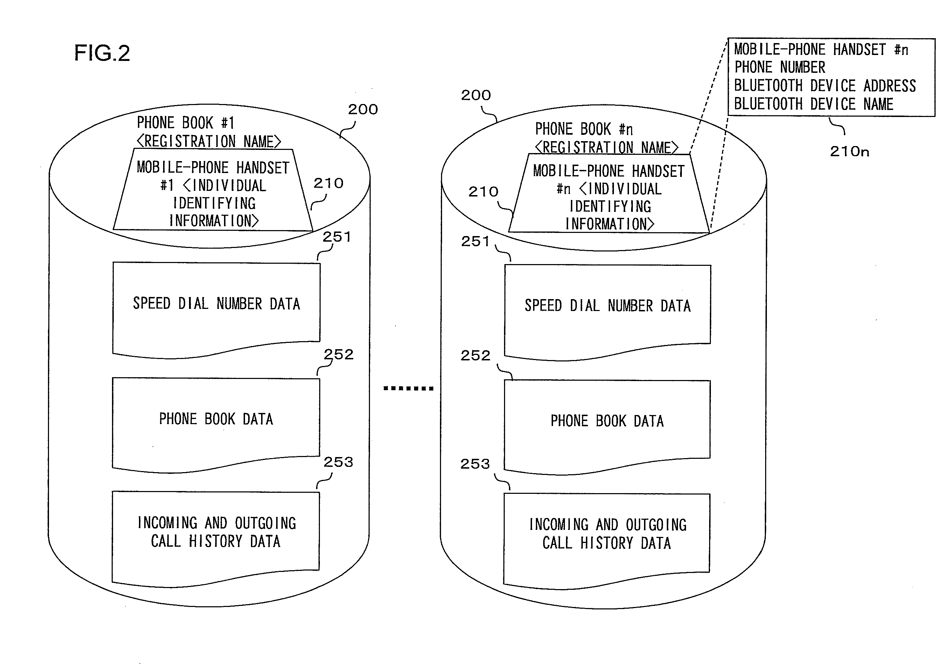

The auxiliary storage 160 stores information of a phone book and the like whose association with mobile-phone handset individual identifying information is to be replaced and registered. The phone book will be described later in the explanation of FIG. 2. While as the auxiliary storage 160, a hard disk drive is used, it may be a CD, a DVD, a flash memory, or another recording medium, and a readout device for such recording media instead.

The communication interface 170 is used when the vehicle-mounted hands-free device 100 performs data communication with a mobile-phone handset 500. The data communication is performed using any of the following methods, wireless communication such as Bluetooth (Registered Trademark), infrared communication, or the like, or wired communication via cable connection. If Bluetooth is used, for example, the communication interface 170 is configured to include an antenna, an RF (Radio Frequency) circuit, which is not shown in the figure, and the like for data transmission and reception.

The phone book stored in the auxiliary storage 160 will be explained with reference to FIG. 2. A phone book 200 whose association with mobile-phone handset individual identifying information 210 is to be replaced and registered is configured as a database in an identifiable manner with the mobile-phone handset individual identifying information 210 as a key. The mobile-phone handset individual identifying information 210 is mobile-phone handset unique identifying information (ID). Each phone book is managed by giving a registration name to each of the plurality of mobile-phone handsets 500. As a registration name for the phone book 200, for instance, a Bluetooth Device Name, which is defined by the Bluetooth standard, or an arbitrary name according to a user input is used. As the mobile-phone handset individual identifying information 210, for example, a Bluetooth Device Address, which is defined by the Bluetooth standard, or a phone number is used.

FIG. 2 shows the phone books 200 of the n mobile-phone handsets 500, each of which is managed with the mobile-phone handset individual identifying information 210#1 to #n as a key. In the phone books 200, for example, speed dial data 251, phone book data 252, incoming and outgoing call history data 253, and the like are managed individually. The example of the mobile-phone handset individual identifying information 210n in the phone book#n shown in FIG. 2 includes a phone number, a Bluetooth Device Address, and a Bluetooth Device Name of a mobile-phone handset associated with the phone book#n. A speed dial number included in the speed dial data 251 is managed in association with, based upon the user input, a phone number, for instance, that is frequently called among the phone numbers included in the phone book data 252. The user can make a call by selecting a speed dial number instead of selecting and calling a phone number included in the phone book data 252. The incoming and outgoing call history data 253 includes, for a predetermined number of latest incoming and outgoing calls, the phone number, date, and time of incoming and outgoing calls from a destination from which those incoming and outgoing calls were made recently, i.e., an incoming and outgoing call history at the vehicle-mounted hands-free device 100 and the mobile-phone handset 500.

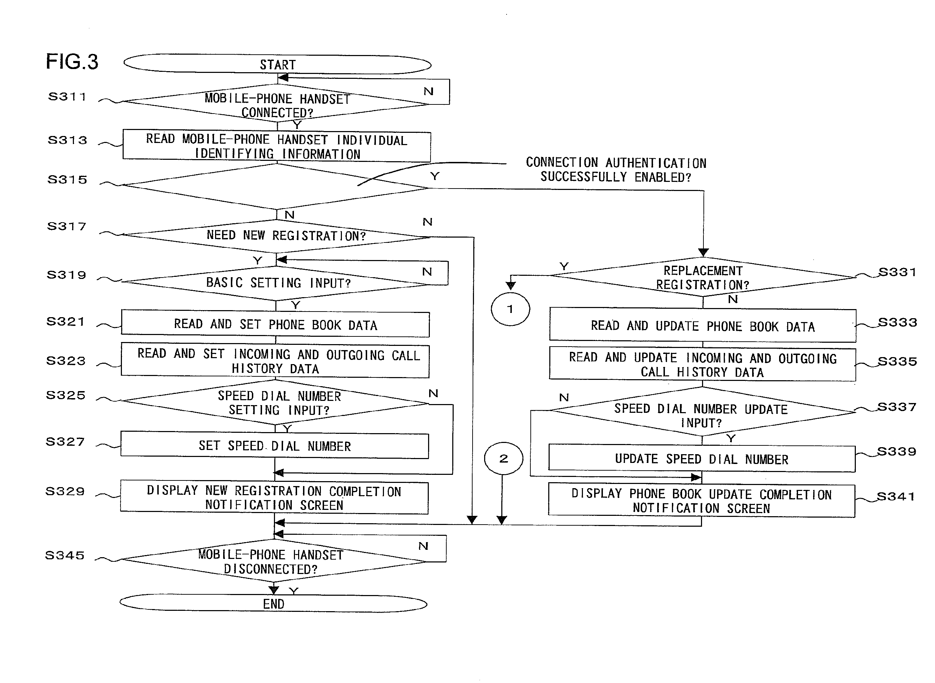

New registration, update registration, and replacement registration processing procedure for the phone book 200 according to the embodiment will be explained with reference to the flowcharts of FIG. 3and FIG. 4. These flowcharts show the processing procedure in which the CPU 110 executes a phone book data management program that is stored in advance. Upon connecting the mobile-phone handset 500 to the vehicle-mounted hands-free device 100, the CPU 110 starts to execute the phone book data management program and then starts a variety of registration processing procedures for the phone book 200.

In step S311, the CPU 110 makes a decision as to whether or not the mobile-phone handset 500 has been connected. If a positive decision is made, the processing procedure proceeds to step S313 and, if a negative decision is made, the processing of step S311 is repeated until the positive decision is acquired. In step S313, the CPU 110 reads the mobile-phone handset individual identifying information 210 described above from the connected mobile-phone handset 500.

In step S315, the CPU 110 makes a decision as to whether or not connection authentication for the connected mobile-phone handset 500 has been successfully enabled. If a positive decision is made, the processing procedure proceeds to step S331 described later and, if a negative decision is made, the processing procedure proceeds to step S317.

In step S317, the CPU 110 makes a decision as to whether or not new registration for the connected mobile-phone handset 500 is needed. For example, the CPU 110 controls the display module 140 so that an inquiry screen that inquires of the user as to whether or not new registration for the connected mobile-phone handset 500 is needed is displayed on a monitor 145 and, upon the input of the declaration of intention of the user as for the inquiry screen through an operation with the user input device 130, the CPU 110 makes a decision as to whether or not new registration for the mobile-phone handset 500 is needed. If a positive decision is made, the processing procedure proceeds to step S319 and, if a negative decision is made, the processing procedure proceeds to step S345 described later.

In step S319, the CPU 110 makes a decision as to whether or not basic setting required for the new registration described above has been input through an operation with the user input device 130. The contents of the basic setting are, for instance, the location of a folder in which the phone book 200 is stored in the auxiliary storage 160, the registration name for the phone book 200, the phone number given to the mobile-phone handset 500, and the like. The registration name for the phone book 200 is limited to one that uses an arbitrary name based upon a user input. In this manner, an area of the phone book 200 in association with the mobile-phone handset 500 is ensured in the phone book folder that has been set, and the speed dial data 251, the phone book data 252, and the incoming and outgoing call history data 253 are stored in the area with, for example, an input phone number as a key.

In step S321, phone book data are read from the connected mobile-phone handset 500 and set as the phone book data 252 in an area of the phone book 200 ensured in the phone book folder described above. Similarly, in step S323, incoming and outgoing call history data are read from the connected mobile-phone handset 500 and set as the incoming and outgoing call history data 253 in an area of the phone book 200 ensured in the phone book folder described above.

In step S325, the CPU 110 makes a decision as to whether or not setting of a speed dial number has been input through an operation with the user input device 130. More specifically, the CPU 110 makes a decision as to whether or not speed dial number data 251 corresponding to a speed dial number associated with a phone number included in the phone book data 252 that is under the new registration processing have been input. If a positive decision is made, in step S327, the speed dial number data 251 having been input are set in the phone book 200 that is under the new registration processing and the processing procedure proceeds to step S329. If a negative decision is made, the processing procedure skips step S327 and proceeds to step S329.

In step S329, the CPU 110 controls the display module 140 so that a new registration completion notification screen is displayed on the monitor 145. In step S345, the CPU 110 waits for disconnection of the mobile-phone handset 500 having been connected and, upon disconnection, the processing procedure terminates. In other words, execution of a phone book registration update program when the mobile-phone handset 500 is connected to the vehicle-mounted hands-free device 100 terminates. After that, normal use such as screen display of data of the phone book 200, an operation of the mobile-phone handset 500, or the like is enabled.

As described earlier, as a result of the decision in step S315, if a positive decision is made, i.e., if connection authentication is successfully enabled, the processing procedure proceeds to step S331. In step S331, the CPU 110 makes a decision as to whether or not the phone book 200 associated with the connected mobile-phone handset 500 is designated as the phone book 200 associated with the successor mobile-phone handset, i.e., makes a decision as to whether or not to perform replacement registration of the phone book 200, the association of which with the mobile-phone handset individual identifying information 210 is replaced. This decision is made, for instance, by control of the display module 140 by the CPU 110 so that a selection screen as to whether or not to perform replacement registration is displayed on the monitor 145 and by selection of any of the options on the selection screen through an operation with the user input device 130. Performing the replacement registration is selected when the user of the mobile-phone handset 500 repurchases the successor mobile-phone handset and intends that the phone book 200 that has been associated with the mobile-phone handset 500 is associated with the successor mobile-phone handset from now onwards. In this case, the decision result in step S331 is a positive decision. If a positive decision is made, the processing procedure proceeds to step S351 described later and, if a negative decision is made, the processing procedure proceeds to step S333.

In step S333, the phone book data are read from the connected mobile-phone handset 500 and the phone book data 252 in the phone book 200 stored in the phone book folder described above are updated. Similarly, in step S335, the incoming and outgoing call history data are read from the connected mobile-phone handset 500 the incoming and outgoing call history data 253 in the phone book 200 stored in the phone book folder described above are updated.

In step S337, the CPU 110 makes a decision as to whether or not setting of a speed dial number for a phone number included in the updated phone book data 252 has been input through an operation with the user input device 130. If a positive decision is made, in step S339, based upon setting of the speed dial number having been input, the speed dial number data 251 are updated and the processing procedure proceeds to step S341. If a negative decision is made, the processing procedure skips step S339 and proceeds to step S341.

In step S341, the CPU 110 controls the display module 140 so that a phone book update completion notification screen is displayed on the monitor 145 and the processing procedure proceeds to step S345 described above.

As described above, in step S331, as a result of a decision made by the CPU 110 as to whether or not to perform replacement registration of the phone book 200, if a positive decision is made, the processing procedure proceeds to step S351. In step S351, the phone book 200 whose association with the mobile-phone handset individual identifying information 210 is to be replaced and registered, i.e., the phone book 200 associated with the connected mobile-phone handset 500, is searched in the auxiliary storage 160. After searching the phone book 200, the CPU 110 makes a decision in step S353 as to whether or not the connected mobile-phone handset 500 has been disconnected and, if a negative decision is made, waits until a positive decision is acquired and, if a positive decision is made, makes a decision in step S355 as to whether or not the successor mobile-phone handset has been connected. More specifically, for instance, at the time when the phone book 200 whose association with the mobile-phone handset individual identifying information 210 is to be replaced and registered is searched, the CPU 110 controls the display module 140 so as to display on the screen of the monitor 145 a message to prompt the user to perform disconnection of the mobile-phone handset 500 from the vehicle-mounted hands-free device 100 and connection of the successor mobile-phone handset to the vehicle-mounted hands-free device 100. Upon disconnecting the mobile-phone handset 500, the CPU 110 controls the display module 140 so as to display on the screen of the monitor 145 only the message to prompt the user to perform connection of the successor mobile-phone handset.

In step S355, if a negative decision is acquired, the processing waits until a positive decision is acquired and, when the successor mobile-phone handset is connected, the positive decision is acquired. If the positive decision is acquired, the mobile-phone handset individual identifying information 210 is read from the successor mobile-phone handset in step S357. In step S359, the CPU 110 associates the phone book 200 searched in step S351, for which the replacement registration is performed, with the mobile-phone handset individual identifying information 210, which has been read in step S357, and registers the phone book 200 in the auxiliary storage 160. In other words, the mobile-phone handset individual identifying information 210, which has been associated with the phone book 200, is changed to the mobile-phone handset individual identifying information 210 of the successor mobile-phone handset and the phone book 200 is registered. Thus, the mobile-phone handset individual identifying information 210 of the successor mobile-phone handset is used as a new key for managing the phone book 200.

In step S361, the CPU 110 controls the display module 140 so that a replacement registration completion notification screen of the phone book is displayed on the monitor 145 and the processing procedure proceeds to step S345 described above. It is to be noted that each processing in steps S351, S357, and S359 described above may be executed manually by an input through an operation with the user input device 130 in place of being executed automatically.

The vehicle-mounted hands-free device 100 according to the embodiment described above achieves the following operations and advantageous effects. (1) The phone book 200, including the speed dial number data 251, the phone book data 252, and the incoming and outgoing call history data 253, whose association with the mobile-phone handset individual identifying information 210 is to be replaced and registered is managed for each of the plurality of mobile-phone handsets 500 registered in the vehicle-mounted hands-free device 100 and identified with the mobile-phone handset individual identifying information 210 as a key. Due to this, when the mobile-phone handset 500, which has been registered in the vehicle-mounted hands-free device 100, is replaced with a new mobile-phone handset or the like, management of the phone book 200 can be succeeded smoothly so that the phone book 200 of the registered mobile-phone handset 500 is managed as data that attribute to the new mobile-phone handset.

(2) Also at the beginning of replacement registration processing procedure to replace association of the phone book 200 with the mobile-phone handset individual identifying information 210, connection authentication processing of the mobile-phone handset 500, which is a data migration source of the phone book 200, is performed. This can prevent execution of an illegal replacement registration processing procedure regarding association of the phone book 200 with the mobile-phone handset individual identifying information 210 by a third party pretending to be the user who owns the mobile-phone handset 500.

### ---Examples of variation---

(1) In the explanation of FIG. 2 described above, for example, a Bluetooth Device Name, which is defined by the Bluetooth standard, an arbitrary name based upon a user input, or the like is assumed to be used as a registration name for the phone book 200. For instance, it may be arranged that a Bluetooth Device Name is selected in preference as an initial setting value of the registration name when Bluetooth is used as a data communication method between the vehicle-mounted hands-free device 100 and the mobile-phone handset 500. In this case, it may be arranged that when the Bluetooth Device Name is displayed on the screen of the monitor 145 as the initial setting value of registration name, the registration name can be changed to an arbitrary value or string by an operation of the user input device 130.

(2) In the explanation of FIG. 2 described above, for example, a Bluetooth Device Address, which is defined by the Bluetooth standard, a phone number, or the like is assumed to be used as the mobile-phone handset individual identifying information 210. For instance, when Bluetooth is used as a data communication method between the vehicle-mounted hands-free device 100 and the mobile-phone handset 500, individual identifying information in which a Bluetooth Device Name, which is defined by the standard, is associated with a Bluetooth Device Address may be used as the mobile-phone handset individual identifying information 210. Individual identifying information in which a phone number is associated with a Bluetooth Device Address may be used as the mobile-phone handset individual identifying information 210. Individual identifying information in which a phone number is associated with a combination of a Bluetooth Device Address with a Bluetooth Device Name may be used as the mobile-phone handset individual identifying information 210.

(3) In the explanation of FIG. 3 described above, the speed dial number setting input in step S325 and the speed dial number update input in step S337 are assumed to be performed based upon an operation with the user input device 130. However, it may be arranged that when reading the phone book data 252 and the incoming and outgoing call history data 253 from the mobile-phone handset 500, the CPU 110 automatically sets a speed dial number based upon the phone book data 252 and the incoming and outgoing call history data 253.

(4) The notification screen display in steps S329, S341, and S361 of FIG. 4 described above may be accompanied by a voice guidance coming from the speaker 155, which is caused by the CPU 110 actuating the audio module 150.

(5) In the vehicle-mounted hands-free device 100 of the present embodiment described above, also at the beginning of the replacement registration processing procedure to replace association of the phone book 200 with the mobile-phone handset individual identifying information 210, connection authentication processing of the mobile-phone handset 500, which is a data migration source of the phone book 200, is performed. If the decision result in step S331 is a positive decision, security may be improved by a user authentication procedure such as a password in place of the connection authentication processing or in addition to the connection authentication processing. It may be arranged that for the user authentication procedure, in addition to a password, for example, a Bluetooth Device Address and a Bluetooth Device Name, which are defined by the Bluetooth standard, or a phone number is used.

The embodiments and the examples of variation described above may be combined. In addition, the present invention is not to be limited to any configuration according to the embodiments above described, as long as the functions characterizing the present invention remain intact.

Although the variety of embodiments and examples of variations are described above, the present invention is not to be limited only to those contents. The scope of the present invention includes other possible embodiments invented within the scope of the technical idea of the present invention.

The disclosure of the following priority application is herein incorporated by reference: Japanese Patent Application No. 2010-17192 (filed on January 28, 2010)

## Claims

1. A hands-free device for a mobile-phone handset, comprising:
a read unit that detects connection of a mobile-phone handset and reads identifying information of the mobile-phone handset connected;
a phone book creation unit that creates a phone book for each piece of the identifying information; and
a change unit that changes the identifying information assigned to the phone book to identifying information of another mobile-phone handset.

2. A hands-free device for a mobile-phone handset according to claim 1, further comprising:
an inquiry unit that, when the identifying information of the mobile-phone handset is read by the read unit, inquires of a user as to an intention of the user for change by the change unit of the identifying information assigned to the phone book;
an input unit with which the user inputs the intention in response to an inquiry by the inquiry unit; and
a control unit that controls the change based upon the intention.

3. A hands-free device for a mobile-phone handset according to claim 1 or 2, wherein:
the phone book includes phone book data that includes a phone number, speed dial data that includes a speed dial number, incoming and outgoing call history data that includes an incoming and outgoing call history of the mobile-phone handset connected, and the identifying information.

4. A phone book registration method, comprising:
searching a phone book associated with a first mobile-phone handset in a storage in response to a user input;
reading identifying information of a second mobile-phone handset, which is different from the first mobile-phone handset, from the second mobile-phone handset; and
newly associating the identifying information read from the second mobile-phone handset with the phone book searched and registering the phone book into the storage.

5. A phone book registration method according to claim 4, wherein:
the user input is based upon an intention of a user for newly associating the identifying information with the phone book and registering the phone book into the storage.

6. A phone book registration method according to claim 4 or 5, wherein:
the identifying information is at least one of a Bluetooth Device Address of a Bluetooth standard, a combination of the Bluetooth Device Address with a Bluetooth Device Name, and a phone number.

7. A phone book registration method according to any one of claims 4 to 6, wherein:
the phone book includes phone book data that includes a phone number, speed dial data that includes a speed dial number, incoming and outgoing call history data that includes an incoming and outgoing call history of the first mobile-phone handset, and the identifying information.

## Amended claims

### Amended claims in accordance with Rule 137(2) EPC.

**1.** A hands-free device for a mobile-phone handset, comprising:
a storage that stores a phone book;
a search unit that searches the phone book associated with a first mobile-phone handset in the storage in response to a user input;
a read unit that reads identifying information of a second mobile-phone handset, which is different from the first mobile-phone handset, from the second mobile-phone handset; and
a registration unit that newly associates the identifying information read by the read unit from the second mobile-phone handset with the phone book searched by the search unit and registers the phone book into the storage.

**2.** A hands-free device for a mobile-phone handset according to claim 1, wherein:
the user input is based upon an intention of a user for newly associating the identifying information with the phone book and registering the phone book into the storage.

**3.** A hands-free device for a mobile-phone handset according to claim 1 or 2, wherein:
the phone book includes phone book data that includes a phone number, speed dial data that includes a speed dial number, incoming and outgoing call history data that includes an incoming and outgoing call history of the first mobile-phone handset, and the identifying information.

**4.** A phone book registration method, comprising:
searching a phone book associated with a first mobile-phone handset in a storage in response to a user input;
reading identifying information of a second mobile-phone handset, which is different from the first mobile-phone handset, from the second mobile-phone handset; and
newly associating the identifying information read from the second mobile-phone handset with the phone book searched and registering the phone book into the storage.

**5.** A phone book registration method according to claim 4, wherein:
the user input is based upon an intention of a user for newly associating the identifying information with the phone book and registering the phone book into the storage.

**7.** A phone book registration method according to claim 4 or 5, wherein:
the phone book includes phone book data that includes a phone number, speed dial data that includes a speed dial number, incoming and outgoing call history data that includes an incoming and outgoing call history of the first mobile-phone handset, and the identifying information.
Amended claims 1, 2, and 3 have been made so as to correspond to amended claims 4, 5, and 7 with different categories.
The basis of the amendment for Claim 1 is found in, for example, the vehicle-mounted hands-free device 100, the CPU 110, and the auxiliary storage 160 of FIG. 1, the processing from step S351 to S359 of FIG. 4, and the paragraphs 0011, 0013, 0017, 0029, and 0030 of the description.
The basis of the amendment for Claim 2 is found in, for instance, the processing of step S331 of FIG. 3 and the paragraph 0025 of the description.
The basis of the amendment for Claim 3 is found in, for example, the phone book 200 of FIG. 2 and the paragraphs 0015 and 0016 of the description.
The document 3, which is cited in the invention set forth in Claim 4 of this application, states managing as to which mobile-phone handset the phone book data can be used with. However, there is no statement regarding that phone book data that correspond to the mobile-phone handset to be replaced that has been registered in the hands-free device are succeeded by being associated with the successor mobile-phone handset as the inventions set forth in each of Claims 1 and 4 of the present application.
